# EUROPEAN PATENT SPECIFICATION

(11) **EP 1 429 483 B1**
(45) Date of publication and mention of the grant of the patent: **07.06.2006**
(21) Application number: 02360343.4
(22) Date of filing: 12.12.2002
(51) Int. Cl.: H04J 3/08, H04Q 11/00

(54) **Signaling of defects for HW supported protection switching inside an optical cross-connected system**
Defektsignalisierung für Hardware unterstützte Ersatzschaltung in einem optischen Querverbindungssystem
Signalisation de défauts pour commutation de protection supportée en hardware dans un système de brassage optique

(43) Date of publication of application: 16.06.2004
(73) Proprietor: ALCATEL, 75008 Paris (FR)
(72) Inventor: Beisler, Werner, 71638 Ludwigshaven (DE); Wettengel, Heinz, c/o Alcatel SEL AG, 70435 Stuttgart (DE); Hägele, Volker,Dr. c/o Alcatel SEL AG, 70435 Stuttgart (DE)
(74) Representative: Urlichs, Stefan

(56) References cited:
- EP-A- 0 813 349
- EP-A- 0 977 391
- WO-A-00/42811
- WO-A-01/33897
- WO-A-02/071701
- US-A1- 2001 046 207

## Description

The present invention relates to a digital communication device comprising interconnected modules for processing and for handling received data signals. Further, the invention relates to a method for processing and/or handling a data signal within a communication device as mentioned above.

Digital communication devices as mentioned above are generally used in modern digital telecommunications systems which have been significantly advanced over recent years, particularly in the rate at which information can be communicated. The extremely high bandwidth now available in digital telecommunic a-tions systems have enabled the communication of large volumes of data, for example from computer to computer as well as digital data representative of other media such as video displays. Since a successful transmission of digital data among computers requires high reliability and high quality transmission, digital communication devices, like digital cross-connects, now provide for example performance monitoring by which the error rate of received digital data is monitored by way of cyclic redundancy check (CRC) and other conventional coding techniques. Further, conventional telecommunications systems also generally provide some amount of redundancy so that failure of a telecommunications line or network element does not result in the loss of the communicated message. Conventional telecommunications systems with performance monitoring have implemented certain alarm conditions by which events such as "loss of signal" and error rates exceeding various thresholds are alerted. In response, the system can switch to a redundant line to again enable communication of the digital data in the system.

Conventional fiber optic terminals have implemented 1:1 redundancy for the fiber optic lines in a system, with some amount of automatic switching. According to this 1:1 redundancy scheme, the overhead portion of the bandwidth is monitored to determine if a loss of signal or alarm indication signal condition is being received. In these redundancy schemes, upon receipt of such an alarm signal the terminal will automatically switch its transmission to the other of the two fiber optic lines, enabling transmission of the data despite the failure of the first fiber optic line.

Beside these protection techniques for ensuring a failure-free data transmission between digital communication devices within the communications system, there are also protection techniques focussing on the failure-free data transmission within a digital communication device (called "Equipment Protection System EPS").

The equipment protection technique is also based on redundant components of the communication device which are fed with a copy of the original data signal received by the communication device. In the event that a component of the communication device fails, the data signal path through the redundant component is selected.

As already mentioned, the standard method for monitoring and indicating an error is to monitor the content of the received digital data and to indicate errors by writing this information into the digital data.

EP 0 977 391 A2 describes a distributed switch fabric. Selection of signals through the switch fabric is controlled by deriving information for the signal at any point along a transmission path and embedding the signal status information in each of the signals using multiple signal status layers. Each of the signals carries its respective signal status information as it propagates along the transmission path, so that the embedded signal status information can be selectively extracted from any of the multiple signal status layers to facilitate a selection decision at any of the distributed switch fabrics. Signal status information can be combined with signal data in many different ways, such as by using a telemetry channel, or by modulating the amplitude, frequency, or phase of the signal data.

However, the increasing bandwidth of modern communications systems require considerable efforts for monitoring the data. Therefore, there is a demand for transparent communication devices. In this context, transparent means that the communication devices shall pass the digital data without analyzing the content of the data.

Beside this demand for more transparency, there is also a demand for increasing the reliability of communication devices.

This is of particular interest in view of cross-connect devices which are physically large systems distributed over several racks. Due to these dimensions, cables are needed to interconnect shelves and racks of the cross-connect device, however, the reliability of cabling is not very good.

In view of the above, the object of the present invention is to provide a digital communication device and a method for processing a data signal within such a communication device which allows a simple way of signaling detection of signaled effects without the need to terminate high-electrical or optical signals, that is without the need to analyze the content of the signals.

This object is solved by a digital communication device as according to claim 1.

That means in other words that the data signal received by said interconnected module is squelched in the event that the monitoring means detects a signal defect. It is not necessary to analyze the content of the data signal or to encode any signal or alarm status within the data signal, that is within a predetermined section of the data blocks.

Particularly, for the subsequent modules or communication devices receiving the squelched data signal, it is readily possible to detect a defect and to pass it to the next device or module without any modification of the data signal.

Hence, the transparency of the data signal flow through the communication device is enhanced. Particularly, the inventive digital communication device allows signaling of defects through several stages or modules within the device transparently.

In a preferred embodiment, the digital communication device comprises a first I/O module for receiving a data signal and transmitting two copies of said data signal, at least two of said interconnected modules for processing said data signal, wherein a first group of said interconnected modules receiving said first copy of said data signal and a second group of said interconnected modules receiving said second copy of said data signal, and a second I/O module for receiving said copies of the data signal transmitted by said interconnected modules, said second I/O module comprising means for monitoring said received copies of said data signal and transmitting those copy of said data signal which has not said predetermined signal status.

This means that the digital communication device selects a redundant data signal in the event that the original data signal is detected as squelched.

This measure has the advantage that a so-called equipment protection is achieved in a simple and cost -effective manner.

It is preferred that the monitoring means comprises a threshold detector if optical signals have to be detected. If, however, electrical signals have to be detected, said monitoring means comprises a frequency detector. The frequency detector may be implemented as a counter which counts rising or falling edges of the electrical signal. A more complicated but also more precise implementation may be seen in a PLL (phase locked loop) based frequency detector.

In both cases the monitoring means is able to check whether the data signal is erroneous and defect, respectively. Particularly, the monitoring means checks the frequency of the data signal and determines whether there is a loss of lock.

The advantage of these measures is that the monitoring means operate transparently without analyzing the content of the data signal.

In a further preferred embodiment, the communication device is a cross-connect device, wherein said interconnected modules are switching matrix components. It is further preferred that said first I/O module comprises means for monitoring said received data signal and for generating an output data signal having a predetermined signal status (squelched data signal) if said received data signal is erroneous.

This measure allows to build up a network protection switching, for example SNCP, in addition to the afore-mentioned equipment protection. This may be achieved by providing the monitoring means also in the first I/O module (input module), which transmits a squelched data signal in the event of detecting a signal defect. This squelched data signal will then be replaced with the redundant data signal in the second I/O module of the device.

In a preferred embodiment, said first I/O module receives a copy of the data signal via a protection line and comprises means for monitoring said received data signal supplied via a working line and for transmitting said copy of said data signal if said received data signal is erroneous.

This measure has the advantage that the equipment protection of the communication device may be linked with the network protection of a communications system.

The object of the present invention is also solved by a method according to claim 7.

In a preferred embodiment, the step of checking said data signal comprises the step of checking its frequency. If the data signal is an optical signal instead of an electrical signal, the step of checking said data signal comprises the step of checking the signal level and comparing it with a threshold value. More preferably, said output data signal is checked whether it has said predetermined signal status, and if so, a copy of said input data signal is transmitted as said output data signal.

The afore-mentioned measures result in the same advantages as pointed out in connection with the communication device. Therefore, it is refrained from repeating these facts.

Further features and advantages can be taken from the following description and the enclosed drawings.

It is to be understood that the features mentioned above and those yet to be explained below can be used not only in the respective combinations indicated, but also in other combinations or in isolation, without leaving the scope of the present invention.

An embodiment of the invention is shown in the drawings and will be explained in more detail in the description below with reference to same. In the drawings:
- Fig. 1: is a schematic block diagram of a communication device for illustrating the present invention;
- Fig. 2: is a schematic block diagram of a portion of an optical cross-connect;
- Fig. 3: is a schematic block diagram of two communication devices being part of a network; and
- Fig. 4: are some examples of protection schemes.

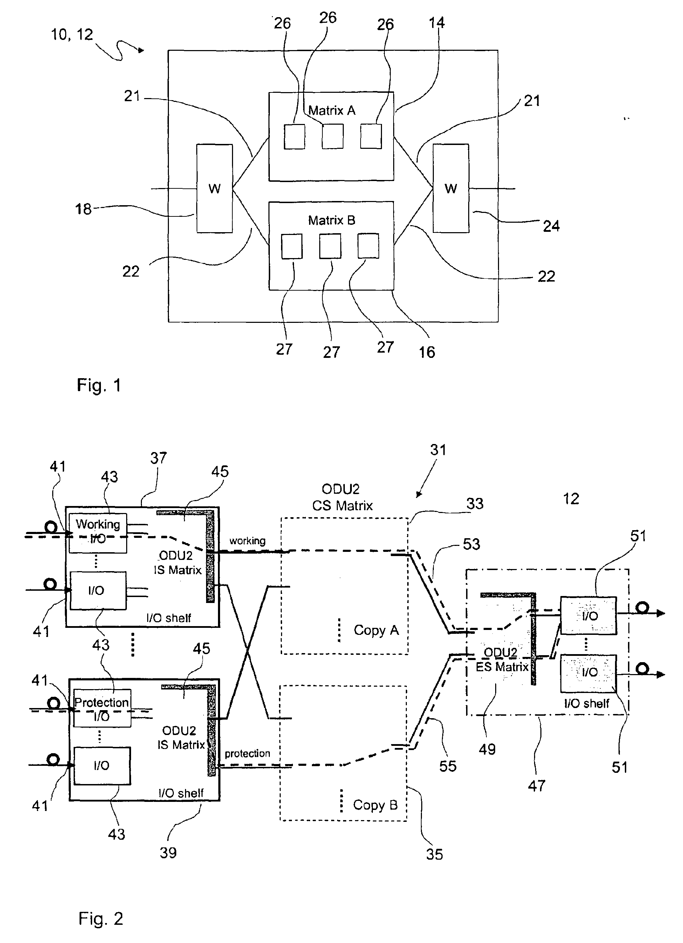

In Fig. 1, a communication device is schematically shown as a block diagram for illustrative purposes only. The communication device is indicated with reference numeral 10. The communication device 10 may for example be provided as an optical cross-connect 12. Generally, optical cross-connects are used to obtain a flexible connection in between different parts of a WDM (wavelength division multiplexing) optical network. Typically, an optical cross-connect 12 has 8 to 128 input ports and the same amount of output ports. By a remote command a signal into one of the input ports can be switched in order to exit at anyone of the output ports that is or can be made available. The optical cross-connect can be "all-optical", i.e. the signal through a cross-connect is carried by light (photons all the way). The optical cross-connect can also be opto-electrical, i.e. the light signal entering the cross-connect is converted to electrical signals by an opto/electrical converter at the entrance. The electric signal is then switched in an electrical switch core and converted to light again by an electrical/opto converter at the exit side of the cross -connect.

The communication device 10 shown in Fig. 1 comprises two switch matrices 14, 16 which are mutually redundant and hence are designed identically. Both switch matrices 14, 16 are connected with an input module 18 which supplies identical data signals to both matrices via lines 21 and 22.

The output sides of both matrices 14, 16 are connected with an output module 24 which is adapted to select one of the data signals output by the matrices 14, 16.

It is to be noted that for clarity reasons, the single transmission lines shown in Fig. 1 each represent a plurality of lines connecting the respective modules of the communication device 10. For example, transmission line 21 represents a plurality of separate transmission lines. Nevertheless it is also possible that the shown transmission lines 21 are formed as single lines transporting for example multiplexed signals.

The diagram in Fig. 1 also indicates that the matrices 14, 16 comprise a number of components 26, 27 for processing or handling data signals.

Since the operation of a cross-connect 12 is generally known in the art, it is refrained from giving a detailed description herein.

In addition to the structure of a communication device 10, preferably a cross-connect 12, as described above, the communication device 10 is provided with means for detection and signaling of defects of the data signal passing through the device 10. The detection and signaling means comprises a frequency detector in case that electrical signals be detected and comprises a threshold detector in case that optical signals be detected.

In the first case, the frequency detector checks whether the frequency of the data signal is correct. If not, the data signal has lost its relation to a general clock signal (loss of lock). In this case, a squelch circuit provided in the detection and signaling means squelches the data signal detected as defect and transmits this squelched signal to the next component of the communication device 10. In the context of the present application, a squelched signal is a signal having a defined signal status. For example, such a squelched signal may have a level of 0 Volt in case of electrical signal.

It is to be noted that a squelched signal represents a signal incorporating the information that any failure has occurred. It is further to be noted that this signaling of a signal defect is carried out without any analyzing or manipulating of bits or bytes of the data signal. Hence, this kind of detection and signaling is completely transparent. Moreover, the generated squelched signal may be received and transmitted by any other component of the communication device without amendment or modification.

Generally, the components 26 and 27 of the matrices 14, 16 are provided with such detection and signaling means so that any failure occurring along the transmission path of the data signal from the input module 18 to the output module 24 can be detected and signaled.

In order to implement an equipment protection, the output module 24 is comprised of a selecting circuit which receives the data signal of matrix 14 and the redundant data signal of matrix 16. If the selecting circuit detects a squelched signal, it selects the redundant data signal for passing to the output.

In view of the above, the main function of the detection and signaling means is to monitor an incoming data signal on defects and to squelch the signal to have a defined signal status which can be detected by subsequent stages/modules of the device.

In Fig. 2, a portion of a cross-connect 12 is schematically shown. The cross-connect 12 comprises a CS matrix 31 constituted by two redundant matrices 33, 35. The CS matrix 31 is for example part of the optical data unit 2 matrix (ODU 2 matrix).

The CS matrix 31 is supplied with data signals by a number of input/output modules (I/O modules), two of which 37, 39 are shown. Each I/O module 37, 39 comprises a plurality of inputs 41 which are connected with input circuits 43. The input circuits 43 process the received data signals in a certain manner and supply the signals to an IS matrix 45. Each IS matrix 45 has a plurality of output ports, two of which are shown in Fig. 2 as connected with the CS matrix 31.

The IS matrix 45 provides a copy of each original data signal supplied to matrix 33, whereas the copy of this data signal is supplied to the second matrix 35 of the CS matrix 31. This is made for protection reasons as already described with reference to Fig. 1.

The output ports of the CS matrix 31 are connected with an I/O module 47 which in turn comprises a matrix 49 and a number of output circuits 51.

As already mentioned before, the connection of two communication devices (network elements) within an optical network system is obtained by two transmission lines which are referred to as working line and protection line. Both lines transport identical data signals from one network element to another network element. This technique allows to react on any failure in one of the transmission lines.

Due to this protection technique, the cross-connect 12 shown in Fig. 2 comprises input ports 41 connected with the working line and input ports 41 connected with the protection line. Particularly, the I/O module 37 is assigned to the working line and the I/O module 39 is assigned to the protection line.

It is to be noted that the components and modules of the cross-connect 12 partially shown in Fig. 2 are distributed generally over several racks so that it is necessary to interconnect the modules and components via cables. In order to detect any cable problem, the cross-connect 12 comprises detection and signaling means as already described with reference to Fig. 1. Particularly, the input circuits 43 of the I/O modules 37, 39 comprise these detection and signaling means. Of course, every other module or component of the cross-connect may also comprise a detection and signaling means if required.

The detection and signaling means is adapted to generate a squelched signal if the received data signal is defect. Such a squelched signal then passes for example the IS matrix 45, the CS matrix 31 and arrives at the I/O module 47 and there at one of the output circuits 51.

In Fig. 2, the path of a signal transmitted via the protection line and the working line is indicated by broken lines 53, 55. As apparent, both data signals come together in the output circuit 51. Therein, a selecting circuit checks whether the working data signal is a squelched signal. If so, the selecting circuit selects the redundant data signal supplied via the protection line and the signal path indicated with reference numeral 55. Hence, the output circuit 51 supplies the data signal of the protection line to its output port.

It is to be noted that the squelched signal may pass every subsequent module or stage up to the output circuit 51 of the input/output module 47.

Hence, the use of the detection and signaling means allows to implement a very effective and transparent equipment protection in order to increase the reliability of the cross-connect 12.

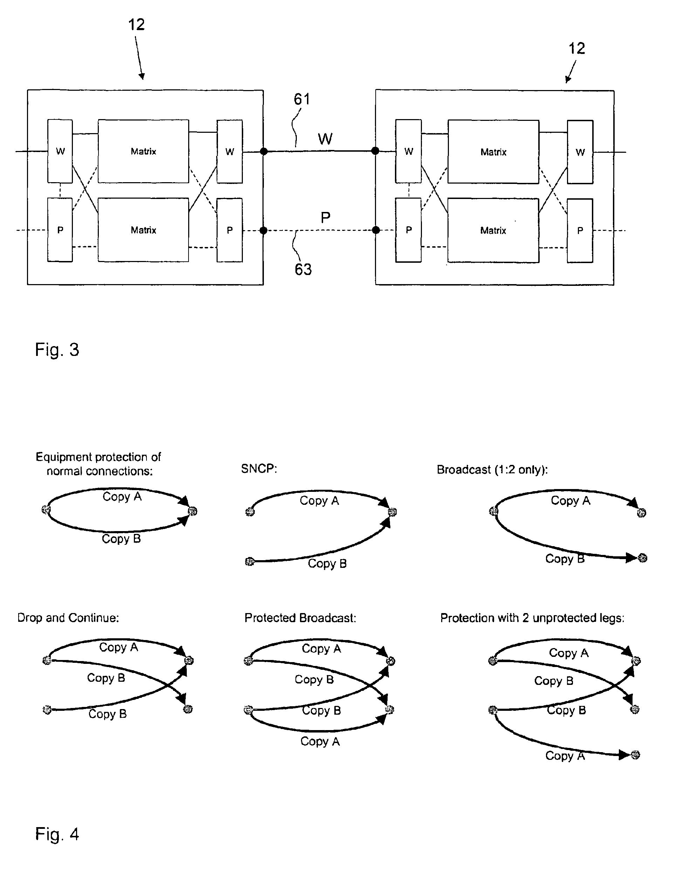

In Fig. 3, two cross-connects 12 are schematically shown for describing the mentioned network protection technique. As mentioned before, each cross-connect 12 is fed with data signals via a working line W 61 and a copy of these data signals via a protection line P 63. In the event that the working line 61 is defect, the I/O module of the cross-connect 12 connected with the working line 61 detects this defect and generates a squelched signal. This squelched signal passes through the modules of the cross-connect to the output circuit. There, it is detected as a squelched signal and in response thereto the redundant data signal supplied via the protection line 63 is selected as output signal.

In Fig. 4, some possible protection schemes are shown. Since these are self-explanatory, it is refrained from a further detailed description thereof. Just briefly, the first scheme describes the equipment protection of normal connections which is generally achieved by transmitting two copies of a signal from one node to a destination note. Adjacent to this scheme, the so-called SNCP protection scheme is shown. This describes that two copies of a signal provided by two different nodes shall be transmitted to one destination node via two different paths. This scheme is implemented by providing a working line and a protection line, as described above.

The present invention has been described on the basis of a cross-connect 12. However, it is to be noted that the detection and signaling means may also be used in other communication devices. The present invention is not limited to cross-connects.

## Claims

1. A digital communication device comprising interconnected modules for processing and/or handling received data signals, **characterized in that** said interconnected modules (26, 27) each comprise monitoring means for monitoring said data signal and for generating an output signal having a predetermined signal level if said data signalis erroneous, wherein said monitoring means comprises frequency or threshold detection means to check without bit or byte analysis of said output signalwhether said output signal has said predetermined signal level.

2. A digital communication device according to claim 1, **characterized by**
- a first I/O module (18) for receiving a data signal and transmitting two copies of said data signal
- at least two interconnected modules (14, 16, 26, 27) for processing said data signal, wherein a first group (14) of said interconnected modules receiving said first copy of said data signal and a second group (16) of said interconnected modules receiving said second copy of said data signal; and
- a second I/O module (24) for receiving said copies of the data signal transmitted by said interconnected mo d-ules, said second I/O module comprising means for monito ring said received copies of said data signal and transmi t-ting those copy of said data signal which has not said predetermined signal status.

3. A communication device according to any of the preceding claims, **characterized in that** it is a cross-connect device (12), wherein said interconnected modules are switching matrix components.

4. A communication device according to any of the preceding claims, **characterized in that** said predetermined signal status of said output data signal is zero (low signal).

5. A communication device according to any of claims 2 to 4, **characterized in that** said first I/O module (18) comprises monitoring means for monitoring said received data signal and for generating an output data signal having a predetermined signal level if said received data signal is erroneous.

6. A communication device according to any of claims 2 to 4, **characterized in that** said first I/O module (18) receives a copy of the data signal via a protection line (63) and comprises monitoring means for monitoring said re-ceived data signal supplied via a working line (61) and for transmitting said copy of said data signal if said received data signal is erroneous.

7. A method for processing a data signal within a communication device, comprising the steps of:
- receiving an input data signal;
- checking the input data signal whether it is erroneous;
- if the data signal is erroneous, generating an output signal having a predetermined signal level;
- transmitting said output signal to a subsequent module (26, 27) within said communication device; and
- verifying, without bit or byte analysis, at said subsequent module (26, 27) whether said output signal has said predetermined signal level by checking its frequency or by checking the signal level and comparing it with a threshold value.

8. A method according to claim 7, **characterized**
**in that** said output data signal is checked whether it has said predetermined signal status, and if so, a copy of said input data signal is transmitted as said output data signal.

## Patentansprüche

1. Eine digitale Kommunikationsvorrichtung, die miteinander verbundene Module zur Verarbeitung und/oder zur Behandlung empfangener Datensignale enthält, **dadurch gekennzeichnet, dass** die miteinander verbundenen Module (26, 27) jeweils Überwachungs-Mittel zur Überwachung des Datensignals und zur Erzeugung eines Ausgangssignals, das einen vorher festgelegten Signalpegel hat, wenn das Datensignal fehlerhaft ist, enthalten, wobei das Überwachungs-Mittel Frequenz- oder Schwellwert-Erkennungs-Mittel enthält, um ohne Bit- oder Byte-Analyse des Ausgangsignals zu überprüfen, ob das Ausgangssignal den vorher festgelegten Signalpegel hat.

2. Eine digitale Kommunikationsvorrichtung gemäß Anspruch 1, **gekennzeichnet durch**
- Ein erstes E/A-Modul (18) zum Empfang eines Datensignals und zum Senden von zwei Kopien des Datensignals
- Mindestens zwei miteinander verbundene Module (14, 16, 26, 27) zur Verarbeitung des Datensignals, worin eine erste Gruppe (14) der miteinander verbundenen Module die erste Kopie des Datensignals empfängt und eine zweite Gruppe (16) der miteinander verbundenen Module die zweite Kopie des Datensignals empfängt; und
- Ein zweites E/A-Modul (24) zum Empfang der Kopien des Datensignals, das von den miteinander verbundenen Modulen gesendet wird, wobei das zweite E/A-Modul Mittel zur Überwachung der empfangenen Kopien des Datensignals und zum Senden der Kopie des Datensignals, das nicht den vorher festgelegten Signal-Status hat, enthält.

3. Eine Kommunikationsvorrichtung gemäß einem beliebigen der obigen Ansprüche, **dadurch gekennzeichnet, dass** sie eine Querverbindungseinrichtung (12) ist, worin die miteinander verbundenen Module Koppelvielfach-Komponenten sind.

4. Eine Kommunikationsvorrichtung gemäß einem beliebigen der obigen Ansprüche, **dadurch** gekennzeicklnet, dass der vorhen festgelegte Signal-Status des Ausgangs-Datensignals Null (Signal mit Low-Pegel) ist.

5. Eine Kommunikationsvorrichtung gemäß einem beliebigen der Ansprüche 2 bis 4, **dadurch gekennzeichnet, dass** das erste E/A-Modul (18) Überwachungs-Mittel zur Überwachung des empfangenen Datensignals und zur Erzeugung eines Ausgangs-Datensignals, das einen vorher festgelegten Signalpegel hat, wenn das empfangene Datensignal fehlerhaft ist, enthält.

6. Eine Kommunikationsvorrichtung gemäß einem beliebigen der Ansprüche 2 bis 4, **dadurch gekennzeichnet, dass** das erste E/A-Modul (18) über eine Ersatzleitung (63) eine Kopie des Datensignals empfängt und Überwachungs-Mittel zur Überwachung des empfangenen Datensignals, das über eine Arbeitsleitung (61) geliefert wird, und zum Senden der Kopie des Datensignals, wenn das empfangene Datensignal fehlerhaft ist, enthält.

7. Ein Verfahren zur Verarbeitung eines Datensignals innerhalb einer Kommunikationsvorrichtung, das folgende Schritte umfasst:
- Empfang eines Eingangs-Datensignals;
- Überprüfung des Eingangs-Datensignals, ob es fehlerhaft ist;
- Wenn das Datensignal fehlerhaft ist, Erzeugung eines Ausgangssignals, das einen vorher festgelegten Signalpegel hat;
- Senden des Ausgangssignals an ein nachfolgendes Modul (26, 27) innerhalb der Kommunikationsvorrichtung; und
- Ohne Bit- oder Byte-Analyse Überprüfung in dem nachfolgenden Modul (26, 27), ob das Ausgangssignal den vorher festgelegten Signalpegel hat, indem seine Frequenz überprüft wird, oder indem der Signalpegel überprüft und mit einem Schwellwert verglichen wird.

8. Ein Verfahren gemäß Anspruch 7, **dadurch gekennzeichnet, dass** das Ausgangs-Datensignal überprüft wird, ob es den vorher festgelegten Signal-Status hat, und falls ja, wird eine Kopie des Eingangs-Datensignals als das Ausgangs-Datensignal gesendet.

## Revendications

1. Dispositif de communication numérique comprenant des modules interconnectés pour traiter et/ou gérer des signaux de données reçus, **caractérisé en ce que** lesdits modules interconnectés (26, 27) comprennent chacun un moyen de surveillance pour surveiller ledit signal de données et pour générer un signal de sortie ayant un niveau de signal prédéterminé si ledit signal de données est erroné, dans lequel ledit moyen de surveillance comprend un moyen de détection de fréquence ou de seuil pour vérifier sans analyse des bits ou des octets dudit signal de sortie si ledit signal de sortie présente ledit niveau de signal prédéterminé.

2. Dispositif de communication numérique selon la revendication 1, **caractérisé par**
- un premier module d'E/S (18) pour recevoir un signal de données et transmettre deux copies dudit signal de données
- au moins deux modules interconnectés (14, 16, 26, 27) pour traiter ledit signal de données, dans lesquels un premier groupe (14) desdits modules interconnectés recevant ladite première copie dudit signal de données et un deuxième groupe (16) desdits modules interconnectés recevant ladite deuxième copie dudit signal de données ; et
- un deuxième module d'E/S (24) pour recevoir lesdites copies du signal de données transmises par lesdits modules interconnectés, ledit deuxième module d'E/S comprenant un moyen pour surveiller lesdites copies reçues dudit signal de données et pour transmettre la copie dudit signal de données qui ne possède pas un état prédéterminé du signal.

3. Dispositif de communication numérique selon l'une quelconque des revendications précédentes, **caractérisé en ce qu'**il s'agit d'un dispositif répartiteur (12) dans lequel lesdits modules interconnectés sont des composants matriciels de commutation.

4. Dispositif de communication numérique selon l'une quelconque des revendications précédentes, **caractérisé en ce que** ledit état prédéterminé du signal dudit signal de sortie est zéro (signal au niveau bas).

5. Dispositif de communication numérique selon l'une quelconque des revendications 2 à 4, **caractérisé en ce que** ledit premier module d'E/S (18) comprend un moyen de surveillance pour surveiller ledit signal de données reçu et pour générer un signal de données de sortie ayant un niveau de signal prédéterminé si ledit signal de données reçu est erroné.

6. Dispositif de communication numérique selon l'une quelconque des revendications 2 à 4, **caractérisé en ce que** ledit premier module d'E/S (18) reçoit une copie du signal de données par le biais d'une ligne de protection (63) et comprend un moyen de surveillance pour surveiller ledit signal de données reçu fourni par le biais d'une ligne de trafic (61) et pour transmettre ladite copie dudit signal de données si ledit signal de données reçu est erroné.

7. Procédé de traitement d'un signal de données au sein d'un dispositif de communication comprenant les étapes de :
- réception d'un signal de données d'entrée ;
- contrôle du signal de données d'entrée pour vérifier s'il est erroné ;
- si le signal de données est erroné, génération d'un signal de sortie ayant un niveau de signal prédéterminé ;
- transmission dudit signal de sortie à un module suivant (26, 27) au sein dudit dispositif de communication ; et
- vérification, sans analyse des bits ou des octets, au niveau dudit module suivant (26, 27) si ledit signal de sortie présente ledit niveau de signal prédéterminé en contrôlant sa fréquence ou en contrôlant le niveau de signal et en le comparant avec une valeur de seuil.

8. Procédé selon la revendication 7, **caractérisé en ce que** ledit signal de données de sortie est contrôlé pour vérifier s'il présente ledit état de signal prédéterminé et, dans l'affirmative, une copie dudit signal de données d'entrée est transmise en tant que dit signal de données de sortie.
